# EUROPEAN PATENT APPLICATION

(11) **EP 4 491 027 A1**
(43) Date of publication of application: **15.01.2025**
(21) Application number: 24186192.1
(22) Date of filing: 03.07.2024
(51) Int. Cl.: A21D 2/00, A21D 8/02, A21D 8/04, A21D 10/00, A23L 7/104, A23L 29/00

(54) **SOURDOUGH STARTER HAVING A PROLONGED SHELF LIFE**

(30) Priority: 14.07.2023 NL 2035390
(71) Applicant: Sonneveld Group B.V., 3356 LJ Papendrecht (NL)
(72) Inventor: Vugs, Herald H.C.F., 3356 LJ PAPENDRECHT (NL); Weegels, Peter Louis, 3356 LJ PAPENDRECHT (NL); De Jong, Sanne Johanna Maria, 3356 LJ PAPENDRECHT (NL); Broeders, Danny, 3356 LJ PAPENDRECHT (NL); Mierop, Nico, 3356 LJ PAPENDRECHT (NL); Do Carmo Branco, Pedro Miguel, 3356 LJ PAPENDRECHT (NL)
(74) Representative: Arnold & Siedsma

(57) **Abstract**

The present invention relates to a sourdough starter having a prolonged shelf life for use in the production of sourdough. The present invention furthermore relates to a sourdough comprised of the sourdough starter and methods for providing the sourdough starter and methods for preparing a sourdough by kickstarting the sourdough using the sourdough starter, and use of the sourdough starter for providing bakery products.

## Description

The present invention relates to a sourdough starter having a prolonged shelf life for use in the production of sourdough. The present invention furthermore relates to a sourdough comprised of the sourdough starter and methods for providing the sourdough starter and methods for preparing a sourdough by kickstarting the sourdough using the sourdough starter, and use of the sourdough starter for providing bakery products.

Sourdough is a type of bread that is made using a natural fermentation process. It is produced by using a sourdough starter. To create a sourdough starter, a mixture of flour and water is left fermented at room or chilled temperature for one day, mixed with new flour and fermented further. In general, this is repeated 3 to 5 times. This procedure is called back slopping. Over time, the mixture will start to ferment and develop a distinct sour smell and flavor, indicating that the sourdough starter is active and ready to use. The mixture will begin to ferment as naturally occurring yeast and bacteria present in the flour and environment will multiply and feed on the carbohydrates in the mixture. During fermentation the micro-organisms produce organic acids and carbon dioxide gas. The organic acids give sourdough its characteristic sour taste and act as a natural preservative, helping to extend the shelf life of the bread. As the fermentation process continues, the mixture will become bubbly and will develop a tangy, sour aroma and flavor.

The sourdough is the foundation for making sourdough bread and other baked goods by mixing it with additional flour, water, and other ingredients. The sourdough is typically maintained by regularly "feeding" it with fresh flour and water to keep the culture active and healthy. However, it is very difficult and may be unpredictable to maintain a consistent healthy and active sourdough starter that has a consistent texture and aroma, such to provide for a bakery product of consistent quality and taste. The sourdough process requires quite some resources (people, equipment, storage capacity) and skills to maintain a secure (no fouling) and stable (in processing and product quality) and functional (generating sufficient volume and open structure) sourdough. Maintaining a sourdough can be challenging in view of time management, overfeeding or underfeeding the sourdough to stay active and healthy, and to prevent contamination with unwanted contaminants like mold, pathogens, or other harmful microorganisms.

The shelf life of sourdough can vary depending on several factors, such as the ingredients used, the fermentation process, and the storage conditions. In general, if not fed with fresh flour, sourdough will become strongly acidic, and the micro-organisms will perish and the sourdough loses its fermentation ability and the acid profile becomes unpleasant when baked into a bread. Sourdough can be stabilized in several ways, e.g., by drum drying, freeze drying or additional acidification. With drying a substantial amount of flavors are lost and the sourdough loses its sensory benefits. With acidification and drum drying the fermentation activity is lost and additional yeast is needed to obtain a sufficient large volume to obtain an open crumb structure. With freeze drying the viability of the micro-organisms may be retained, but whilst being expensive, part of the flavors will be lost. Another route for a longer shelf life is via freeze dried starters, composed of a mixture of micro-organisms. These starters are quite costly and still require back slopping.

One of the difficulties with producing bakery products with sourdough is that it requires a longer fermentation time compared to other types of bread. This means that bakers need to plan ahead and allow enough time for the dough to ferment properly. Additionally, sourdough can be more difficult to work with because it is less elastic than other types of bread dough, making it harder to shape and handle. Sourdough also tends to have a denser texture and a more complex flavor profile, which may not be preferred by all consumers.

Considering the above, there is a need in the art for an easy-to-use sourdough starter with an extended shelf life, preferably at least 10 weeks, having reduced additives and/or preservatives, while maintaining microbial quality and dough properties. Furthermore, there is a need in the art for a sourdough having shorter processing times, i.e., 75% of time reduction compared to the starters of the state of the art, while maintaining taste, texture and volume of the bakery product. There is a need in the art for a sourdough starter which has a long shelf life (similar to dry dough starter) but has the advantages of the wet i.e. fermentation capacity delivering taste and less or no actively added yeast.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by a sourdough starter having a prolonged shelf life for use in the production of sourdough, wherein the sourdough starter is comprised of
- a sourdough primer comprised of a mixture of water with a flour,
- a dry flour carrier

wherein the weight ratio of sourdough primer to flour carrier is between 1:3 to 3:1 (w/w), preferably between 1:2 to 2:1 (w/w), most preferably between 1.5:1 to 1:1 (w/w), and
wherein the sourdough starter has a moisture content between 20 to 60 wt%, preferably between 22 to 50 wt%, more preferably 25 to 40 wt%.

The sourdough starter of present invention has an extended shelf life in comparison to the known and present available active sourdoughs on the market, having a shelf life of at least 10 weeks and more preferably at least 6 months. At the same time, the sourdough starter of the present invention, when used for the production of a sourdough bread, has comparable taste, look and feel (sensory properties, volume and open crumb structure). The aroma levels are comparable, the acetic acid levels in the bakery product are in general even reduced, providing an even more tasty product. The sweetness of the sour bread obtained using the starter of present invention is similar as well as the gumminess and texture of the product. The volume of the product seems to be slightly reduced (up to 10% volume reduction), but well within allowable parameters to provide for commercial products. Furthermore, the sourdough starter can be used directly (also due to its long shelf life) in the preparation of the sough dough itself, without the need for long processing times, as with known sourdough starters. The weight ratio of sourdough primer to flour carrier is essential to achieve optimal fermentation activity of the sourdough starter while at the same time obtain an optimal shelf life of at least 10 weeks, preferably at least 3 months, more preferably at least 6 months. With the sourdough starter of present invention a sourdough can be prepared and ready for human consumption within at most 2 days, preferably at most 24 hours.

According to a preferred embodiment, the present invention relates to the
sourdough starter, wherein the sourdough primer comprises one or more bacterial cultures selected from the group consisting of lactic acid bacteria (LAB), bacillus cereus, acetic acid bacteria (AAB). Preferably the sourdough starter has a significant amount (at least 10⁶ cfu/g) and constant level of LAB bacteria and much lower amounts of AAB, preferably below 1000 cfu/g.

According to another preferred embodiment, the present invention relates to the sourdough starter, wherein the sourdough primer comprises lactic acid bacteria (LAB) at a concentration of at least 10⁵ cfu/g, preferably at least 10⁶ cfu/g, more preferably at least 10⁷ cfu/g.

According to yet another preferred embodiment, the present invention relates to the sourdough starter, wherein the sourdough primer comprises acetic acid bacteria (AAB) at a concentration of at most 10³ cfu/g, preferably at most 10² cfu/g, more preferably at most 10 cfu/g.

According to another preferred embodiment, the present invention relates to the sourdough starter, wherein the flour of the sourdough primer and/or flour carrier is comprised of one or more flour(s) selected from the group consisting of wheat, durum wheat, rye, barley, emmer, einkorn, wheat flour, such as wheat flour T55 or T65, rye flour, whole meal and rye whole meal, or flours from other cereals or pseudo cereals, preferably wheat flour and wheat flour T55 or T65. Preferably T65 flour is used in the starter having a small % of ash included, which showed to have a positive effect on the shelf life of the product.

According to a preferred embodiment, the present invention relates to the
sourdough starter, wherein the flour of the sourdough primer and of the flour carrier differ from each other or are the same.

According to yet another preferred embodiment, the present invention relates to the sourdough starter, wherein the sourdough primer comprises at most 0.6 wt%, preferably at most 0.5 wt%, more preferably at most 0.4 wt% added yeast, most preferably is free of added yeast. The sourdough primer may comprises yeast that is naturally occurring in the flours. However, apart from these naturally occurring yeast, the sourdough is preferably free of added yeast.

According to a preferred embodiment, the present invention relates to the
sourdough starter, wherein the sourdough primer further comprises actively added yeast, preferably wherein said yeast is bakers yeast. Preferably the sourdough primer has enough fermentation power, so there is no need to add further yeast. However, experiments show that some active sour doughs have enough microbial activity, generating flavor, but not enough fermentation/gassing power. These sour doughs need some minimal support of added yeast.

According to another preferred embodiment, the present invention relates to the sourdough starter, wherein the sourdough primer or flour carrier further comprises one or more artificially added enzymes selected from the group of hemicellulases, cellulases, Beláse B400, Novamyl, Pentopan Mono, Fungamyl 2500sg, Novamyl 3D, Bakezyme Ara, preferably Beláse B400, Novamyl and Pentopan Mono, preferably hemicellulases and cellulases. Preferred are bacterial or fungal amylases, amyloglucosidases, maltogenic amylases, hemicellulases, cellulases, lipases, phospholipases, glucose oxidases or enzyme active malt flours and preferably hemicellulytic enzymes as they generate more flavor precursors.

According to yet another preferred embodiment, the present invention relates to the sourdough starter, wherein the sourdough primer or flour carrier further comprises 0.01 to 1 wt%, preferably 0.1 and 0.3 wt% of malt or malt extract, preferably enzyme active malt or malt extract. The addition of malt or malt extract to the sourdough starter showed to further improve the shelf life of the product, meanwhile positively affecting the sensory (taste, aroma etc.) of the bakery product using the starter.

According to a preferred embodiment, the present invention relates to the
sourdough starter, wherein the sourdough starter does not contain any added improvers or preservatives. The sourdough starter does not require any further additives or preservatives to obtain the long-lasting shelf life as was observed.

According to yet another preferred embodiment, the present invention relates to the sourdough starter, wherein the sourdough starter is free of mold for at least 2 months, preferably at least 3 months, more preferably at least 4 months, most preferably at least 6 months, when stored at a temperature below 7 °C.

According to a preferred embodiment, the present invention relates to the
sourdough starter, wherein the sourdough starter is a semi dry product, preferably wherein said product has a dough or paste like consistency.

The present invention, according to a second aspect, relates to a sourdough comprised of a sourdough starter as disclosed herein.

According to another preferred embodiment, the present invention relates to the sourdough, wherein the sourdough can be prepared and ready for human consumption in at most 2 days, preferably at most 24 hours.

According to yet another preferred embodiment, the present invention relates to the sourdough, wherein the sourdough comprises
- between 10 to 20%, preferably 12 to 17%, more preferably 14 to 16% of the sourdough starter
- between 40 to 60%, preferably 45 to 55%, more preferably 48 to 53% of flour
- between 0.5 to 1.5%, preferably 0.7 to 1.2%, more preferably 0.8 to 1% of salt
- between 30 to 50%, preferably 35 to 45%, more preferably 40 to 42% of additional water (i.e. excluding the water that is in the sourdough starter).

According to a preferred embodiment, the present invention relates to the sourdough obtained with a sourdough starter as disclosed herein.

The present invention, according to a further aspect, relates to a method for providing a sourdough starter as disclosed herein, wherein the method comprises the steps of
a) providing a sourdough primer comprised of a mixture of water with some flour,
b) providing said sourdough primer onto a dry flour carrier

wherein sourdough primer is provided onto said flour carrier in a weight ratio of sourdough primer to flour carrier between 1:3 to 3:1 (w/w), preferably between 1:2 to 2:1 (w/w), most preferably between 1.5:1 to 1:1 (w/w), and
wherein the sourdough starter has a moisture content of between 20 to 60 wt%, preferably between 22 to 50 wt%, more preferably 25 to 40 wt%.

The present invention, according to a further aspect, relates to a method for preparing a sourdough, wherein the method comprises the step of kickstarting a sourdough by using a sourdough starter as disclosed herein, wherein between 20 to 50 wt% of the sourdough starter is mixed with 50% to 80% of a mixture of flour and water, wt% are based on the total weight of the sourdough, wherein the ratio flour to water in the mixture of flour and water is about 1 to 1.

The present invention, according to a further aspect, relates to the use of the sourdough starter for providing a sourdough.

According to another preferred embodiment, the present invention relates to the use of the sourdough starter for providing a bakery product, such as bread, tortillas, pizza, croissants, brioche and panettone, preferably bread, tortillas and pizza.

The present invention will be further detailed in the following examples and figures wherein:

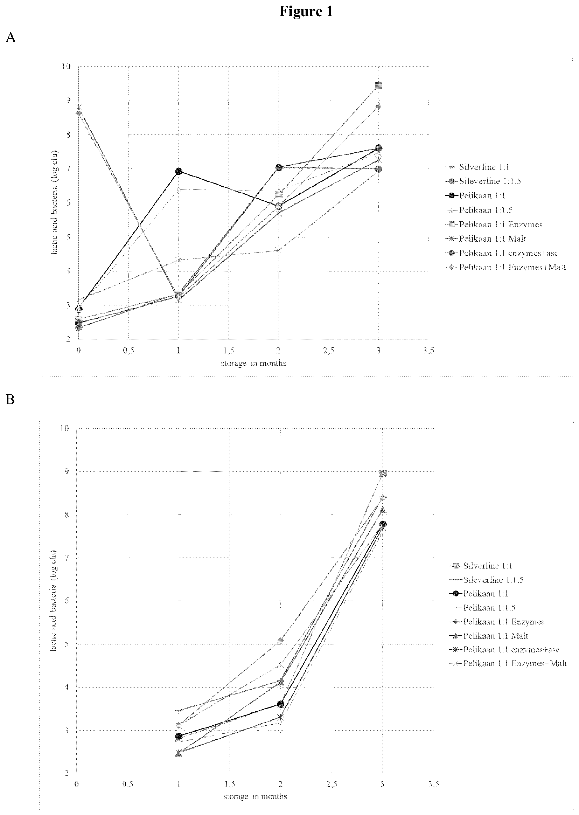

- **Figure 1:**: Shows the amount of lactobacilli during storage of different flour types and additions to the long shelf life sourdough starter (A) and the lactobacilli in the sourdough produced with this starter (B). As can be seen the amount of lactobacilli are increasing during storage time and surprisingly the increase with enzyme active malt addition or with enzyme cocktail is even larger. The sourdough starter comprised different flour types as a carrier; high quality Silverline, and non-corrected flour Pelikaan, and to the lower quality flour Pelikaan enzyme active malt and/or enzymes (cocktail of amylase, hemicellulase) and/or ascorbic acid was added. Samples included are Silverline 1:1, Silverline 1:1.5, Pelikaan 1:1, Pelikaan 1:1.5, Pelikaan 1:1 Enzymes, Pelikaan 1:1 Malt, Pelikaan 1:1 Enzymes + Ascorbic acid, and Pelikaan 1:1 Enzymes + Malt.

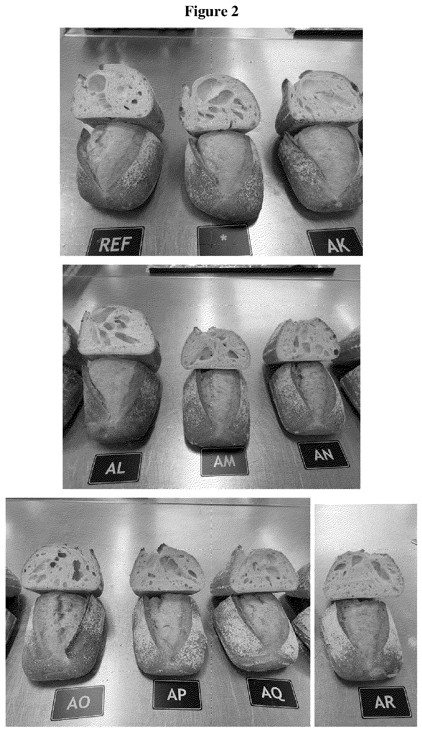

- **Figure 2:**: Shows the bread baked using the sourdough starter after 3 months of storage. The sourdough starter comprised different flour types as a carrier (high quality Silverline, and non-corrected flour Pelikaan). To the lower quality flour Pelikaan enzyme active malt and/or enzymes (cocktail of amylase, hemicellulase) and/or ascorbic acid was added (*) Reference, (AK) Silverline 1:1, (AL) Silverline 1:1.5, (AM) Pelikaan 1:1, (AN) Pelikaan 1:1.5, (AO) Pelikaan 1:1 Enzymes, (AP) Pelikaan 1:1 Malt, (AQ) Pelikaan 1:1 Enzymes + Ascorbic acid, (AR) Pelikaan 1:1 Enzymes+Malt. The resulting breads showed a nice gummy texture, appropriate volume without the usage of yeast.

### Examples - Experiments

### Example 1 - preparation of the sourdough primer and starter having a long shelf life

At first a sourdough primer is prepared according to conventional methods; Briefly, 1 part of flour or whole meal flour (rye, wheat or other cereal based, preferentially with high enzyme activity e.g., amylolytic or hemicellulytic activity) was mixed with 2 parts of water and mixed. The sourdough primer comprised about 10⁶ cfu/g lactic acid bacteria and 10-100 cfu/g acetic acid bacteria. This mixture was fermented for 4 hours in a proofer at 34°C and 80% R.H. Then the mixture was placed for 12 to 24 hours in a refrigerator at 6°C providing a sourdough.

The next day 1 part of the sourdough was mixed with 2 parts of flour and 2 parts of water and mixed. This mixture was fermented for 4 hours in a proofer at 34°C and 80% R.H. and subsequently placed for 12 to 24 hours in a refrigerator at 6°C. This was repeated 1 or 2 times. The resulting sourdough is ready for the preparation of the long shelf-life sourdough starter.

The prepared sourdough primer is then mixed on dry carrier material consisting of wheat flour. The mixture is in the ratio primary sourdough to carrier material 2:1. This long shelf-life sourdough starter when stored below 7°C has a shelf life of more than 10 weeks. After 6 months, the starter was still free of molds.

### Example 2 - preparation of the sourdough starter of lower moisture contents

Sourdough starters were prepared as described in example 1 with different flours as a carrier and at different sourdough primer to dry flour carrier ratios. The molding was followed over time in the samples stored at ambient temperature by visual inspection. The shelf life at ambient temperature depends on the moisture content, wherein it is to be expected that at higher moisture content results in a reduced shelf life as a consequence of increased molding, see Table 1.

**Table 1. Ambient shelf life of sourdough starters comprised of different flour carriers and ratios sourdough-carrier.**

| **Flour carrier type** | **ratio sourdough primer to flour carrier** | **shelf life (months)** | **Water content (%)** |
|---|---|---|---|
| Laco wholemeal | 1 to 4 | 1 | 20.28 |
| Laco wholemeal | 1 to 8 | 2 | 17.55 |
| Pregelatinised wheat flour | 1 to 8 | 4 | 11.47 |
| Wheat flour dried (T65) | 1 to 8 | 2 | 15.06 |

However, it was surprising that the shelf life of the sourdough starters significantly increased with increasing water content when sourdough/flour ratios are at least 1 to 3, i.e. comprising a higher % of water in the sourdough starter, see Table 2. The molding was measured (in log colony forming units (cfu)) and monitored over 2 months, stored at 4 or 22 °C.

**Table 2. Shelf life of sourdough starters comprised of different ratios sourdough-carrier and storage temperature on mold growth during storage.**

| **Flour carrier type** | **Ratio sourdough primer to flour carrier** | **Storage temp (°C)** | **Mold growth (log cfu)** | | |
|---|---|---|---|---|---|
| **Storage time (months)** | | | **1** | **2** | **3** |
| Wheat flour dried (T65) | 1 to 8 | 22 | 1.6 | 3.1 | 3.2 |
| Wheat flour dried (T65) | 1 to 8 | 4 | 1.9 | 1.6 | 1.0 |
| Wheat flour dried (T65) | 1 to 3 | 22 | 1.0 | 1.0 | 1.0 |
| Wheat flour dried (T65) | 1 to 3 | 4 | 1.1 | 1.1 | 1.1 |

### Example 3 - preparation of sourdough bread using sourdough starter

The sourdough starter prepared of example 1 is used in the preparation of sourdough bread. 2000 gr of flour was mixed with 36 gr salt, 600 gr sourdough starter and 1200 gr water. The mixture is then kneaded into a well-developed dough, at about 27-28°C. Next, a further 100 gr of water is added slowly to the mixture towards the end of the kneading. Then the dough is poured into a container with a lid and let it rest for 45 minutes. Fold and turn the dough and let it rest for another 45 minutes. Then weigh dough pieces of 600 grams and shape into pointed model. Dough rest for 20 minutes. Shape dough pieces as desired and place in matching proofing baskets prepared with rye flour and leave the filled proofing baskets in the bakery for 2 hours. Then place them for 12 to 24 hours in refrigerator at 6-8°C and R.H. 70%. Then bake at 240°C top 240°C floor with steam for about 25 minutes + 5 minutes with oven slide open. For baking the sourdough breads on the same day without fermenting overnight, 0.5% yeast is added to the above mixture.

### Example 4 - characteristics sourdough bread using sourdough starter

The above procedure in example 2 is used to make sourdough breads from a sourdough starter. The preparations of the various sourdough starters are described in the following examples. The quality of the starters, sourdough samples and sourdough breads will be discussed.

Sourdoughs were prepared as described above and mixed at different ratios with different carrier flours. To investigate the impact of carrier and storage temperatures in microbial composition, sourdoughs were mixed at different ratios with different carrier flours stored at room temperature (~22 °C) and under cold conditions (~4°C). The shelf life at ambient temperature was assessed by microbial analyses, visually inspecting molding and assessing the sourdough bread making performance.

Under chilled conditions the lactic acid bacteria count remained in the same order of magnitude than at the start, as expected. Surprisingly at chilled conditions in combination with a larger amount of sourdough on the carrier (1:3 instead of 1:8), molding was inhibited and even below the detection level.

### Example 5 -enzyme addition to sourdough starter on shelf life

It was observed that enzyme addition to the carrier flour was important for increasing shelf life of the present invention and improved the taste of the bread itself. Various amylolytic and hemicellulytic enzymes were tested to establish their impact on shelf life, but also on flavor generation, Table 3. The different flavors are scored on a scale of 1 (as being low) to 7 (high), with the reference sample judged at a score of 4. The reference sample is a sourdough starter obtained as in Example 1, but without enzymes added. All tested sourdough starters had a shelf life of at least 3 months.

**Table 3. Impact of Enzymes on sensory quality of sourdough bread**

| **Enzyme** | **dosage (% OFB)** | **Taste** | **Acid** | **Sweet** | **Gumminess** |
|---|---|---|---|---|---|
| Reference | | 4.0 | 4.0 | 4.0 | 4.0 |
| Bakezyme Ara | 0.063 | 3.4 | 2.8 | 4.0 | 3.8 |
| Bakezyme Ara | 0.127 | 3.2 | 3.0 | 3.8 | 3.6 |
| Bakezyme Ara | 0.190 | 3.4 | 3.1 | 3.8 | 3.8 |
| Pentopan Mono | 0.063 | 3.0 | 2.9 | 3.6 | 4.2 |
| Pentopan Mono | 0.127 | 3.3 | 2.9 | 3.8 | 3.9 |
| Pentopan Mono | 0.190 | 3.7 | 3.0 | 3.9 | 4.2 |
| Beláse B400 | 0.063 | 3.8 | 3.2 | 4.4 | 4.2 |
| Beláse B400 | 0.127 | 3.4 | 3.2 | 4.3 | 4.0 |
| Beláse B400 | 0.190 | 3.0 | 2.9 | 3.8 | 4.0 |
| Fungamyl 2500sg | 0.063 | 2.8 | 2.9 | 3.9 | 3.9 |
| Fungamyl 2500sg | 0.127 | 3.0 | 3.6 | 3.9 | 4.3 |
| Fungamyl 2500sg | 0.190 | 3.0 | 2.7 | 3.9 | 4.1 |
| Novamyl | 0.063 | 3.0 | 2.8 | 3.8 | 3.8 |
| Novamyl | 0.127 | 3.0 | 2.8 | 3.6 | 3.6 |
| Novamyl | 0.190 | 3.3 | 2.7 | 4.1 | 4.0 |
| Novamyl 3D | 0.063 | 2.6 | 2.3 | 3.7 | 4.1 |
| Novamyl 3D | 0.127 | 2.9 | 2.4 | 3.9 | 3.8 |
| Novamyl 3D | 0.190 | 2.8 | 2.1 | 3.6 | 3.6 |

Several enzymes were providing sourdough breads that were equal or better than the reference (without additional enzyme). Sweetness and gumminess were equal to the reference. Surprisingly the acid taste was lower in all samples, which gives the sourdough bread a less sour sensation, improving the taste of the sour bread. Overall, the hemicellulytic enzymes were able to provide a taste profile that was not significantly different from the reference, but improved the taste in view of a reduced sourness. All breads also were visually comparable to the reference sample.

### Example 6 -malt addition to sourdough starter on shelf life and taste

It was observed that malt addition to the carrier flour was important for maintaining the fermentation properties of the present invention as the volume of the sourdough breads remained to a higher level. Two different flour types were used as a carrier (high quality Silverline, and non corrected flour Pelikaan). To the lower quality flour Pelikaan enzyme active malt and/or enzymes (cocktail of amylase, hemicellulase) and/or ascorbic acid was added. The microbiological composition was analysed over time. Samples included are Silverline 1:1, Silverline 1:1.5, Pelikaan 1:1, Pelikaan 1:1.5, Pelikaan 1:1 Enzymes, Pelikaan 1:1 Malt, Pelikaan 1:1 Enzymes + Ascorbic acid, and Pelikaan 1:1 Enzymes + Malt.

Figure 1 shows the amount of lactobacilli during storage of different flour types and additions to the long shelf life sourdough starter (A) and the lactobacilli in the sourdough produced with this starter (B). As can be seen the amount of lactobacilli are increasing during storage time and surprisingly the increase with enzyme active malt addition or with enzyme cocktail is even larger. Next, bread was baked using the sourdough starter after 3 months of storage at 4°C. The resulting bread (Figure 2) showed a nice gummy structure, volume within the need to use any yeast to be added.

The sensory properties were determined of the various breads, Table 4. The taste of sourdough breads made with the life sourdough starter with added enzyme active malts and enzymes was superior in aroma and acidity, and equal in sweetness, but a little bit less gummy than the long shelf life sourdough starter without additions (i.e. AM).

**Table 4. Sensory properties of sourdough bread made with sourdough starter of present invention**

| **Flour carrier: sourdough primer** | **aroma** | **sweetness** | **acid** | **gummy** |
|---|---|---|---|---|
| Pelikaan 1:1 (AM) | 4 | 4 | 4 | 4 |
| Pelikaan 1:1.5 (AN) | 4,5 | 4 | 5 | 3,5 |
| Pelikaan 1:1 Enzymes (AO) | 5 | 4,5 | 4,5 | 3 |
| Pelikaan 1:1 Malt (AP) | 5,5 | 4 | 5 | 3,5 |
| Pelikaan 1:1 Enzymes+asc (AQ) | 5,5 | 4 | 5 | 3,5 |
| Pelikaan 1:1 Enzymes+Malt (AR) | 5,5 | 4,5 | 4,5 | 4 |

## Claims

1. A sourdough starter having a prolonged shelf life for use in the production of sourdough, wherein the sourdough starter is comprised of
- a sourdough primer comprised of a mixture of water with some flour,
- a dry flour carrier
wherein the weight ratio of sourdough primer to flour carrier is between 1:3 to 3:1 (w/w), preferably between 1:2 to 2:1 (w/w), most preferably between 1:1.5 to 1 (w/w), and
wherein the sourdough starter has a moisture content of between 20 to 60 wt%, preferably between 22 to 50 wt%, more preferably 25 to 40 wt%.

2. Sourdough starter according to claim 1, wherein the sourdough primer comprises one or more bacterial cultures selected from the group consisting of lactic acid bacteria, and acetic acid bacteria.

3. Sourdough starter according to claim 1 or 2, wherein the sourdough primer comprises lactic acid bacteria (LAB) at a concentration of at least 10⁵ cfu/g, preferably at least 10⁶ cfu/g, more preferably at least 10⁷ cfu/g.

4. Sourdough starter according to any one of the claims 1 to 3, wherein the sourdough primer comprises acetic acid bacteria (AAB) at a concentration of at most 10³ cfu/g, preferably at most 10² cfu/g, more preferably at most 10 cfu/g.

5. Sourdough starter according to any one of the claims 1 to 4, wherein the flour of the sourdough primer and/or flour carrier is comprised of one or more flour(s) selected from the group consisting of wheat, durum wheat, rye, barley, emmer, einkorn, wheat flour, such as wheat flour T65, rye flour, laco whole meal and rye whole meal, preferably wheat flour and wheat flour T65, preferably wherein the flour of the sourdough primer and of the flour carrier differ from each other or are the same.

6. Sourdough starter according to any one of the claims 1 to 5, wherein the sourdough primer comprises at most 0.6 wt%, preferably at most 0.5 wt%, more preferably at most 0.4 wt% added yeast, most preferably is free of added yeast.

7. Sourdough starter according to any one of the claims 1 to 6, wherein the sourdough primer further comprises actively added yeast, preferably wherein said yeast is bakers yeast.

8. Sourdough starter according to any one of the claims 1 to 7, wherein the sourdough primer or flour carrier further comprises one or more artificially added enzymes selected from the group consisting of hemicellulases, cellulases, Beláse B400, Novamyl, Pentopan Mono, Fungamyl 2500sg, Novamyl 3D, Bakezyme Ara, preferably Beláse B400, Novamyl and Pentopan Mono, preferably hemicellulases and cellulases.

9. Sourdough starter according to any one of the claims 1 to 8, wherein the sourdough primer or flour carrier further comprises 0.01 to 1 wt%, preferably 0.1 and 0.3 wt% of malt or malt extract, preferably enzyme active malt or malt extract.

10. Sourdough starter according to any one of the claims 1 to 9, wherein the sourdough starter does not contain any added improvers or preservatives and/or wherein the sourdough starter is a semi dry product, preferably wherein said product has a dough- or paste-like consistency.

11. Sourdough starter according to any one of the claims 1 to 10, wherein the sourdough starter is free of mold for at least 2 months, preferably at least 3 months, more preferably at least 4 months, most preferably at least 6 months, when stored at a temperature below 7 °C.

12. A sourdough comprised of or obtained with a sourdough starter according to any one of the claims 1 to 11, wherein the sourdough comprises
- between 10 to 20% the sourdough starter
- between 40 to 60% flour
- between 0.5 to 1.5% salt
- between 30 to 50% water.

13. A method for providing a sourdough starter of any one of the claims 1 to 11, wherein the method comprises the steps of
a) providing a sourdough primer comprised of a mixture of water with some flour,
b) providing said sourdough primer onto a dry flour carrier
wherein sourdough primer is provided onto said flour carrier in a weight ratio of sourdough primer to flour carrier between 1:3 to 3:1 (w/w), preferably between 1:2 to 2:1 (w/w), most preferably between 1.5:1 to 1:1 (w/w), and
wherein the sourdough starter has a moisture content of between 20 to 60 wt%, preferably between 22 to 50 wt%, more preferably 25 to 40 wt%.

14. A method for preparing a sourdough, wherein the method comprises the step of kickstarting a sourdough by using a sourdough starter of any one of the claims 1 to 11, wherein between 20 to 50 wt% of the sourdough starter is mixed with 50% to 80% of a mixture of flour and water, wt% are based on the total weight of the sourdough, wherein the ratio flour to water in the mixture of flour and water is about 1 to 1.

15. Use of a sourdough starter of any one of the claims 1 to 11 for providing a sourdough or for providing a bakery product, such as bread, tortillas, pizza, croissants, brioche and panettone, preferably bread, tortillas and pizza.
